# EUROPÄISCHE PATENTSCHRIFT

(11) **EP 2 870 438 B1**
(45) Veröffentlichungstag und Bekanntmachung des Hinweises auf die Patenterteilung: **11.05.2022**
(21) Anmeldenummer: 13729299.1
(22) Anmeldetag: 07.06.2013
(51) Int. Cl.: G01F 23/292, G01C 3/00, G01S 17/00

(54) **VERFAHREN UND VORRICHTUNG ZUR LASERBASIERTEN BESTIMMUNG DES FÜLLSTANDS EINES FÜLLGUTS IN EINEM BEHÄLTER**
METHOD AND APPARATUS FOR THE LASER-BASED DETERMINATION OF THE FILLING LEVEL OF A FILLING MATERIAL IN A CONTAINER
PROCÉDÉ ET DISPOSITIF POUR LA DÉTERMINATION BASÉE SUR LASER DU NIVEAU DE REMPLISSAGE D'UNE MATIÈRE DE REMPLISSAGE DANS UN RÉCIPIENT

(30) Priorität: 09.07.2012 DE 102012106149
(43) Veröffentlichungstag der Anmeldung: 13.05.2015
(73) Patentinhaber: Endress+Hauser SE+Co. KG, 79689 Maulburg (DE)
(72) Erfinder: SEILER, Christian, 79424 Auggen (DE); SCHLEIFERBÖCK, Jan, 79589 Binzen (DE); DAMM, Hartmut, 79331 Teningen (DE); JIANG, Mingzheng, 79585 Steinen (DE)
(74) Vertreter: Andres, Angelika Maria
(86) Internationale Anmeldenummer: PCT/EP2013/061805
(87) Internationale Veröffentlichungsnummer: WO 2014/009068

(56) Entgegenhaltungen:
- EP-A1- 0 015 566
- EP-A1- 1 882 959
- WO-A1-01/46653
- WO-A1-2009/079789
- WO-A1-2009/121181
- US-A1- 2004 135 992
- US-A1- 2009 119 044
- None

## Beschreibung

Die Erfindung betrifft ein Verfahren und eine Vorrichtung zur laserbasierten Bestimmung des Füllstands eines Füllguts in einem Behälter nach einem Laufzeitverfahren.

Bekannte Vorrichtungen und Verfahren zur Füllstandmessung mittels Laserpulsen basieren darauf, dass die Laufzeit eines ausgesendeten und an einem Hindernis reflektierten Laserpulses direkt gemessen wird. Hierzu wird die Laufzeit des Laserpulses mittels hochgenauer Bausteine zur Zeitmessung, sog. Time to Digital Converter (TDC), gemessen. Die Arbeitsweise der Bausteine ist vergleichbar mit einer Stoppuhr: Es gibt ein Startsignal und ein Stoppereignis. Das Startsignal wird von einer Sendeelektronik ausgelöst. Das Stoppereignis wird bei Überschreiten einer definierten analogen Schwelle durch das Empfangssignal ausgelöst.

Grundsätzlich sind die bekannten Systeme nur begrenzt mehrzielfähig und daher wenig robust in Bezug auf vorhandene Störgrößen, wie z.B. Dampf, Nebel und Staub. Darüber hinaus sind sie nicht in der Lage, fehlerhafte oder ungültige Empfangssignale anhand der Signalform zu erkennen. Da die Erkennung nicht möglich ist, können ungültige Signale folglich auch nicht ausgeblendet werden.

Aufgrund dieser Einschränkungen und aufgrund von Störquellen, die ggf. im Messbereich vorhanden sind und entsprechende Störreflexionen verursachen, nutzen bekannte Radar-Füllstandmessgeräte das Prinzip der Abtastung des gesamten Signalverlaufes eines Radarpulses aus. Diese bekannten Geräte nehmen den Signalverlauf als sogenannte Hüllkurve oder Echokurve auf und werten diese zwecks Ermittlung des Messwerts mit angepassten und adaptiven Algorithmen durch digitale Signalverarbeitung aus. Bei der bekannten Methode können Störer oder ungültige Signale gezielt als solche erkannt und ausgeblendet werden, so dass sie die Messung im Idealfall nicht beeinflussen. Laserbasierte Füllstandmessgeräte mit Hüllkurvenauswertung existieren aufgrund der nachfolgend beschriebenen Probleme bislang nicht.

Zwar sind im Bereich der Geodaten-Erfassung bereits scannende bzw. abtastende Lasersysteme im Einsatz, die nach dem Prinzip der Hüllkurven- oder allgemein der Full Waveform Abtastung arbeiten und die aufgenommenen Signalformen an Recheneinheiten zwecks Weiter-verarbeitung weiterleiten. Jedoch werden die unterschiedlichen Signalformen hier hauptsächlich dazu verwendet, die vorhandene Geosubstanz zu ermitteln. Bei der Geosubstanz handelt es sich z.B. um Bäume, Wasser, Buschwerk, etc. Bei diesen Systemen liegt der Fokus nicht auf einer exakten Abstandsermittlung. Die bekannten Systeme sind sehr teuer und arbeiten mit Sampling Frequenzen im GHz-Bereich. Für die Füllstandmessung sind die bekannten Systeme wegen nicht ausreichender Update-Raten ungeeignet.

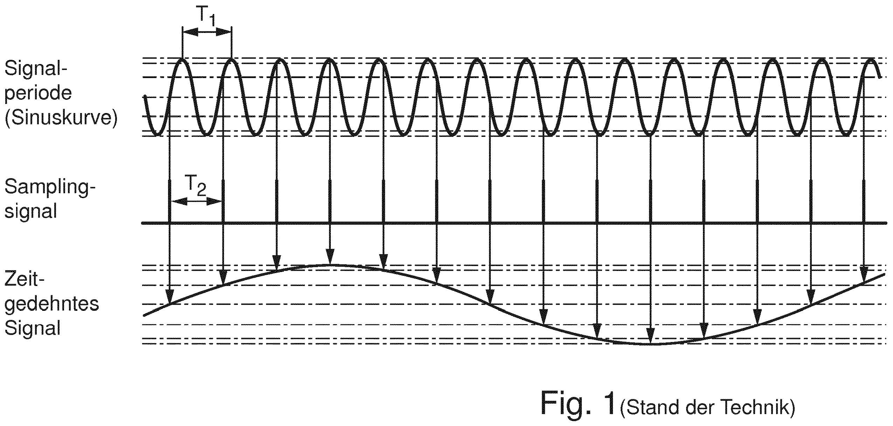

Die Problematik bei abtastenden Systemen vor allem im Bereich der Füllstandmessung liegt in der hierbei geforderten Messgenauigkeit und in der hierbei geforderten Messgeschwindigkeit. Um die geforderte Messgenauigkeit bei Pulsbreiten von 1- 5 ns zu erreichen, sind sehr hohe Abtastfrequenzen und daher schnelle und sehr teure Elektronikkomponenten erforderlich, die darüber hinaus auch noch einen hohen Stromverbrauch aufweisen. Aufgrund der hohen Kosten, aufgrund des hohen Stromverbrauchs und aufgrund der notwendigen Präzision verwendet man in der RadarMesstechnik ein Verfahren, das zur Ermittlung einer Hüllkurve zahlreiche periodisch sehr schnell wiederkehrende Sendepulse verwendet. Durch ein sequentielles Abtast- bzw. Sampling-Verfahren werden die sehr schnellen Sendepulse in ein gedehntes Zeitsignal und damit in den Niederfrequenzbereich transformiert. Das zeitlich gedehnte Zeitsignal lässt sich mit langsameren und damit deutlich billigeren Komponenten digitalisieren und auswerten. In Fig. 1 ist schematisch dargestellt, wie durch sequentielle Abtastung ein hochfrequentes Messsignal in den Niederfrequenzbereich transformiert wird. Das zeitgedehnten Signal im Niederfrequenzbereich ist ein Abbild des hochfrequenten Original-Messsignals.

Besonders kritisch ist die Füllstandmessung bei flüssigen Medien. Hier ist die Oberfläche üblicherweise in Bewegung. Zur hochgenauen Detektion des Füllstands ist eine sehr schnelle Messwerterzeugung im Bereich kleiner oder gleich 1ms notwendig.

Bekannte Radarsysteme verwenden bei entsprechenden Anwendungen sehr hohe Sendeimpulsraten im Bereich mehrerer MHz, damit in kurzer Zeit genügend Sampling Punkte für die auszuwertende Hüllkurve aufgenommen werden können und damit genügend Zeit für die notwendige Mittelung der Messwerte zur Verfügung steht.

Das Sampling erfolgt hierbei durch Kreuzkorrelation von Sendeimpuls und Abtast- bzw. Sampleimpuls, wobei der Abtastimpuls eine geringfügig größere Periodendauer als der Sendeimpuls aufweist. Das Kreuzkorrelationsprodukt wird nachfolgend zu einem gedehnten Zeitsignal auf integriert. Die Korrelation und die Integration lassen sich recht einfach mit analogen Bauteilen realisieren. Der Faktor, um den das Zeitsignal gedehnt ist, ist bevorzugt größer als 80.000. Die gedehnten Zeitsignale können mit einfachen Mitteln digitalisiert und ausgewertet werden. Eine laserbasiertes Füllstandsmessgerät, das auf diesem Prinzip der Unterabtastung beruht, ist unter anderem in der europäischen Patentanmeldung EP0015566 A1 offenbart.

Nachfolgend werden die Nachteile des bekannten Standes der Technik noch einmal zusammengefasst:
Laser-Messgeräte zur Füllstandmessung sind aufgrund Ihrer nicht vorhandenen Mehrzielfähigkeit durch ein TDC-Verfahren nur eingeschränkt geeignet. Bestehende Laserscanner mit Full-Waveform Abtastung entsprechen nicht den Anforderungen, die in der Füllstandmesstechnik wichtig sind. Darüber hinaus sind diese Verfahren aufgrund der hohen Abtastraten sehr teuer zu realisieren. Durch die schnelle Abtastung weisen entsprechende Geräte auch einen überdurchschnittlich hohen Stromverbrauch auf.

Trotz der bereits verwendeten schnellen Komponenten, die bei den bekannten Abtastverfahren verwendet werden, sind die entsprechenden Laserbasierten Systeme für die Füllstandmessung zu langsam. Weiterhin ist zu beachten, dass die Schussrate bei Laserbasierten Systemen durch die Anforderungen an die Augensicherheit gegenüber Radar-Messgeräten deutlich begrenzt ist.

Bei Verwendung von Lasern mit heute gängigen und preislich günstigen Wellenlängen vom sichtbaren Bereich bis in den nahen Infrarotbereich (ca. 900nm) sind die erlaubte Laserleistung und die Schussrate gegenüber den teuren und seltenen Wellenlängen im nahen Infrarotbereich wie 1060 oder 1500nm nochmals deutlich eingeschränkt. Geo-Scanner verwenden aufgrund der geforderten schnellen Schussrate bei hohen Laserleistungen auch oft die sehr teure Technologie im nahen Infrarot-Bereich bei ca. 1500nm.

Heutige Full-Waveform Lasersysteme arbeiten entweder ähnlich dem beschriebenen Radar-Auswerteverfahren nach dem Prinzip der Abtastung periodischer Signale, wobei pro Laserpuls/Laserschuss ein Wert der Hüllkurve abgespeichert wird; alternativ arbeiten die Systeme nach dem Verfahren der Echtzeitabtastung. Die Echtzeitabtastung im Zeitbereich stellt die folgenden Anforderungen und hat die folgenden Vorteile:
- Hohe Messgenauigkeit;
- Digitalisierung einer kompletten Hüllkurve pro Laserpuls;
- Bei der geforderten Messgenauigkeit sind sehr schnelle Abtastfrequenzen im 3 GHz-Bereich notwendig;
- Die Messgeschwindigkeit ist sehr hoch; die maximale Messrate entspricht der Pulsrate;
- Mehrzielfähigkeit vorhanden.

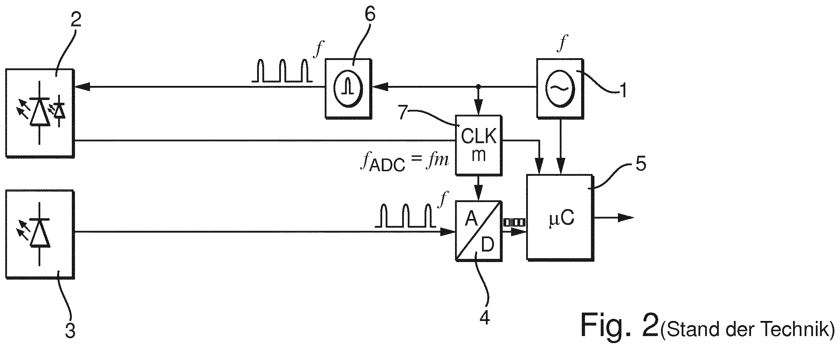

Eine schematische Darstellung der Echtzeit-Abtastung ist in Fig. 2 zu sehen. Die Nachteile der Echtzeit-Abtastung sind:
- Sehr teure High Speed AD-Wandler;
- Sehr hoher Stromverbrauch der AD-Wandlung.

Eine laserbasiertes Füllstandsmessgerät, das auf einer Variante der Echtzeit-Abtastung basiert, ist beispielsweise in der internationalen Veröffentlichungsschrift WO 2009/121181 A1 beschrieben.

Im Folgenden wird die Eignung der beiden bekannten Laser-Auswerteverfahren für die Füllstandmessung betrachtet:
Bei dem ersten bekannten Laser-Auswerteverfahren werden periodische Signale abgetastet, wobei ein Abtastwert pro Laserschuss ermittelt wird. Bekannte Radar-Füllstandmessgeräte lösen die Aufgabe durch das zuvor bereits beschriebene Transformationsverfahren preiswert, relativ schnell und sehr genau, erfordern jedoch bei niedriger Pulsleistung verfahrensbedingt eine extrem hohe Messimpulsrate im MHz-Bereich. Bei Laser-Systemen und der geforderten Laserleistung ist diese Methode im Bereich der Füllstands-messung nicht einsetzbar. Eine analoge Anwendung dieses Verfahrens wäre bei den niedrigen Sendeimpulsraten von Laserbasierten Systemen für die Füllstandmessung zu langsam.

Die Eigenschaften des ersten bekannten Laserbasierten Systems stellen sich wie folgt dar:
- Das System ist kostengünstig realisierbar, da die Abtastung z.B. nur im KHz Bereich erfolgt.
- Das Laserbasiertes Messsystem ist langsam, da es im Vergleich zur Radarmessung eine deutlich begrenzte Schussrate aufgrund der Augensicherheit und aufgrund der Gewinnung nur eines Abtastwertes pro Laserpuls hat. Damit ist es das System für die Füllstandsmessung von Flüssigkeiten ungeeignet.
- Selbst wenn die Laserleistung bei erhöhter Schussrate reduziert wird, ist das System immer noch zu langsam.
- Eine höhere Laserleistung bei erhöhter Schussrate ist nur mit der teuren 1500nm Technologie möglich, da die Augensicherheit bei 1500nm unkritischer ist.
- Bei Erhöhung der Schussrate muss zudem die erreichbare Lebensdauer der Laserdiode berücksichtigt werden. Hohe Schussraten mit hohen Laserleistungen schließen sich grundsätzlich aus.
- Ein entsprechendes System ist energetisch nicht ideal aufgrund der vielen notwendigen Laserpulse pro Hüllkurve. Die Auflösung der Hüllkurve bzw. die Messgenauigkeit bestimmt die Anzahl der Laserpulse

Bei dem zweiten Laserbasierten System mit Echtzeitabtastung sind folgende Punkte hervorzuheben:
- Das Laserbasierte System ist sehr schnell
- Pro Laserpuls wird eine komplette Hüllkurve erzeugt. Dies ist energetisch bezüglich der Laserenergie ideal, da hohe Laserleistungen bei reduzierter Impulsrate möglich sind.
- Es werden sehr hohe Geschwindigkeits-Anforderungen an die Auswerteelektronik gestellt, was den Einsatz schneller RAM-Speicher und eine FPGA-basierte Auswertung erfordert. Dies führt zu hohem Stromverbrauch und hohen Kosten.
- Es ist der Einsatz von High-Speed Giga-Sample ADCs notwendig, die in der Anschaffung sehr teuer sind. Zudem haben die High Speed ADCs einen sehr hohen Stromverbrauch und sind somit in explosionsgefährdeten Bereichen nicht einsetzbar.
- Aufgrund der hohen Kosten ist die Echtzeitabtastung von Laserbasierten Systemen heute für breite Anwendungsgebiete in der Füllstandmessung nicht konkurrenzfähig.

Der Erfindung liegt die Aufgabe zugrunde, ein Verfahren und eine Vorrichtung zur laserbasierten Füllstandsmessung vorzuschlagen, die für den Einsatz in der Automatisierungstechnik geeignet sind.

Die Aufgabe wird bezüglich des Verfahrens zur laserbasierten Bestimmung des Füllstands eines Füllguts in einem Behälter nach einem Laufzeitverfahren dadurch gelöst, dass Laserpulse einer vorgegebenen Impulsbreite erzeugt werden, dass die Laserpulse mit einer definierten Sendewiederholfrequenz in Richtung der Oberfläche des Füllguts ausgesendet werden, dass die definierte Sendewiederholfrequenz der Laserpulse in einer definierten Abhängigkeit zu einer Abtastfrequenz steht, dass die definierte Abhängigkeit derart ausgeprägt ist, dass eine ganzzahlige Anzahl von Perioden der Abtastfrequenz um ein vorgegebenes Zeitintervall größer oder kleiner ist als eine Periodendauer der Sendewiederholfrequenz, dass dieses Zeitintervall so gewählt wird, dass es einer gewünschten Sampleauflösung entspricht und kleiner ist als die Periodendauer der Abtastfrequenz, dass die Laserpulse nach Reflexion an der Oberfläche des Füllguts empfangen werden, dass die an der Oberfläche des Füllguts reflektierten Laserpulse mit einer Abtastfrequenz derart abgetastet werden, dass pro Laserpuls mehrere Abtastwerte erfasst und jeweils als Subechokurve abgespeichert werden, dass die abgespeicherten Subechokurven nach einem Messzyklus zu einer Gesamtechokurve zusammengesetzt werden, und dass der Füllstand anhand der Gesamtechokurve ermittelt wird.

Bevorzugt wird die erfindungsgemäße Lösung bei der Füllstandsbestimmung von flüssigen Medien eingesetzt. Insbesondere ist die Geschwindigkeit der Messwerterfassung so hoch, dass ein Füllstandsmesswert aus Messungen während eines Zeitintervall gewonnen wird, in dem sich die üblicherweise dynamisch verändernde Flüssigkeitsoberfläche im Wesentlichen wie eine statische Oberfläche verhält.

Eine vorteilhafte Ausgestaltung des erfindungsgemäßen Verfahrens sieht vor, dass die definierte Abhängigkeit zwischen der definierten Sendewiederholfrequenz und der Abtastfrequenz realisiert wird, indem die Sendewiederholfrequenz und die Abtastfrequenz von zwei unterschiedlichen frequenzerzeugenden Komponenten (z.B. Oszillatoren) erzeugt werden, dass eine konstante Differenzfrequenz zwischen der Sendewiederholfrequenz und der Abtastfrequenz über einen Regelkreis eingestellt wird, und dass die Sendewiederholfrequenz und die Abtastfrequenz entweder direkt aus den von den Komponenten erzeugten Frequenzen gewonnen werden, oder Dass die Sendewiederholfrequenz und die Abtastfrequenz indirekt über das Multiplizieren oder Teilen der beiden von den Komponenten erzeugten Frequenzen gewonnen werden.

Gemäß des erfindungsgemäßen Verfahrens ist vorgesehen, dass die vorgegebene Abhängigkeit zwischen der definierten Sendewiederholfrequenz und der Abtastfrequenz realisiert wird, indem über eine erste frequenzerzeugende Komponente eine Grundfrequenz erzeugt wird, die größer ist als die Sendewiederholfrequenz, dass aus der Grundfrequenz durch Multiplikation mit einem vorgegebenen Teilerfaktor die Sendewiederholfrequenz gewonnen wird, und dass über eine zweite frequenzerzeugende Komponente die Abtastfrequenz generiert wird.

Gemäß einer bevorzugten Ausgestaltung des erfindungsgemäßen Verfahrens beträgt der Teilerfaktor 1/2ⁿ bzw. 2ⁿ mit n = 1, 2, 3, ... Diese Wahl des Teilerfaktors erlaubt eine kostengünstige und einfache Schaltungsanordnung, da sich die digitalen Frequenzsignale durch die Verwendung von z.B. T-FlipFlops (Toggle FlipFlops) je durchlaufendem Gatter halbieren bzw. verdoppeln lassen. Die Anzahl der verwendeten T-FlipFlops entspricht dem Exponenten n des Teilerfaktors. So kann man beispielsweise mit acht hintereinander geschalteten T-FlipFlops eine Frequenz um den Teilerfaktor 2⁸ =1 /256 reduzieren oder 2⁸ = 256 vergrößern.

Kurz kann das erfindungsgemäße Verfahren als multiple Subechokurven-Abtastung beschrieben werden. Bei dem Verfahren sind mehrere periodische Laserpulse zur Rekonstruktion einer Hüllkurve notwendig. Die Anzahl ist im Vergleich zur bekannten und zuvor beschriebenen Auswertung bei Radar-Messgeräten um einen Faktor von z.B. 300 geringer. Allgemein gesprochen unterscheiden sich die Verfahren um ca. zwei Größenordnungen. Dadurch ergibt sich zwangsläufig auch eine höhere Messgeschwindigkeit. Darüber hinaus sind höhere Laserleistungen aufgrund der langsameren Laserpulsrate möglich, was es möglich macht, die Anforderungen in der Füllstandsmesstechnik zu erreichen.

Das erfindungsgemäße Verfahren ebenso wie die nachfolgend noch näher beschriebene erfindungsgemäße Vorrichtung zeichnen sich durch folgende Eigenschaften und Vorteile gegenüber den herkömmlichen Laserbasierten Systemen aus:
- Hohe Messgeschwindigkeit (gleich oder kleiner als 1ms)
- Geringe spezifische Bauteilkosten
- Geringer Stromverbrauch
- Hohe Laserleistung
- Verwendung gängiger, kostengünstiger Laser-Wellenlängen
- Geringe Laserschussraten
- Erhöhte Laser-Lebensdauer
- Mehrzielfähigkeit und erhöhte Messgenauigkeit durch Hüllkurvenauswertung (Full-Waveform)

Eine vorteilhafte Ausgestaltung des erfindungsgemäßen Verfahrens sieht vor, dass die Grundfrequenz und die Abtastfrequenz der Laserpulse bevorzugt in einem Frequenzbereich von 100-200 MHz liegen.

Eine Weiterbildung des erfindungsgemäßen Verfahrens sieht vor, dass der Zeitabstand für die Bereitstellung der Füllstandsmesswerte so gewählt wird, dass einerseits die Anforderungen an die Messgenauigkeit der laserbasierten Technologie für die Anwendung in der Füllstandsmesstechnik bei flüssigen Medien und andererseits die Sicherheitsanforderungen für die Benutzer der laserbasierten Technologie erfüllt werden. Insbesondere ist vorgesehen, dass die Füllstandsmesswerte eines Messzyklus' in einem Zeitabstand von kleiner 1ms bereitgestellt werden.

Weiterhin wird erfindungsgemäß anhand der Grundfrequenz und der Abtastfrequenz eine Differenzfrequenz erzeugt, die auf einen konstanten Wert geregelt wird. Für die Differenzbildung werden bevorzugt die Grundfrequenz und die Abtastfrequenz unmittelbar herangezogen.

Des weiteren sieht das erfindungsgemäße Verfahrens vor, dass in Abhängigkeit von der gewünschten Auflösung bzw. Messgenauigkeit mehrere Subechokurven aufgenommen werden, wobei die Abtastwerte der einzelnen Subechokurven aufgrund der Grundfrequenz, der Abtastfrequenz, der Differenzfrequenz und des Teilerfaktors jeweils zueinander um einen definiertes Zeitintervall verschoben sind. Dabei wird ein Messzyklus nach Durchschwebung der Differenzfrequenz abgeschlossen, wenn also die Differenzfrequenz eine Periode durchlaufen hat und die Grundfrequenz und die Abtastfrequenz wieder in Phase sind.

Verdeutlicht wird das erfindungsgemäße Verfahren anhand des nach-folgenden Beispiels: Aus einer Grundfrequenz von 200MHz werden durch Teilen durch den Teilerfaktor, z.B. 2¹⁴ = 1/ 16384 ca. 12kHz. Dieser Wert entspricht der Laserpulsrate.

Sind die Grundfrequenz und Abtastfrequenz genau in Phase, beginnt die Messung - ein Messzyklus startet. Im Lasertakt mit der Laserpulsrate von 12kHz werden nun Laserpulse ausgesendet. Mit der Abtastfrequenz von 200MHz wird pro 0,75 Entfernungsmeter ein Abtastwert aufgenommen. Beispielsweise ergeben z.B. 100 Werte die erste Subhüllkurve. Durch die Differenzfrequenz von 800Hz ist die Abtastung beim zweiten Laserpuls um 5 cm gegenüber dem Laserpuls verschoben; er erfolgt also verspätet. Diese Abtastung ergibt die zweite Subhüllkurve. Das Verfahren wird fortgeführt. Nach 15 Abtastungen und jeweils um 5 cm verschobenen Subechokurven sind die 75 cm zwischen zwei Abtastpunkten geschlossen.

Die Zusammensetzung der Gesamtechokurve erfolgt, indem die Werte der ersten Subechokurve z.B. an die Speicherstellen 0, 15, 30, 45... geschrieben werden. Die Werte der zweiten Subhüllkurve bzw. der Subechokurve werden dann an die Stellen 1, 16, 31, 46, .. geschrieben. Die Werte der dritten Subechokurve werden an die Stellen 2, 17, 32, 47,.. geschrieben. usw. Nach 15 Subechokurven ist der Speicher komplett und kann als Gesamtechokurve ausgelesen werden.

Weiterhin wird die Aufgabe, die der Erfindung zugrunde liegt, durch eine laserbasierte Vorrichtung gelöst, die eingerichtet zur Bestimmung des Füllstands eines Füllguts in einem Behälter nach einem Laufzeitverfahren ist, mit einer Signalerzeugungseinheit, die eingerichtet ist, Laserpulse mit einer vorgegebenen Impulsbreite zu erzeugen,
mit einer Sendeeinheit, die eingerichtet ist, die Laserpulse mit einer definierten Sendewiederholfrequenz in Richtung der Oberfläche des Füllguts auszusenden, wobei die definierte Sendewiederholfrequenz der Laserpulse durch Multiplikation einer vorgegebenen Grundfrequenz mit einem Teilerfaktor gewonnen wird, oder wobei eine Grundfrequenz durch Multiplikation einer definierten Sendewiederholfrequenz mit einem vorgegebenen Faktor gewonnen wird,
mit einer Empfangseinheit, die eingerichtet ist, die Laserpulse nach Reflexion an der Oberfläche des Füllguts zu empfangen,
mit einer ersten frequenzerzeugenden Komponente, die ausgelegt ist, eine Grundfrequenz, die größer ist als die Sendewiederholfrequenz, zu erzeugen,
mit einer zweiten frequenzerzeugenden Komponente, die eingerichtet ist, eine von der Grundfrequenz geringfügig abweichende Abtastfrequenz zu generieren,
wobei eine Differenzfrequenz zwischen der der Grundfrequenz und der Abtastfrequenz auf einen konstanten Wert geregelt wird,
wobei die definierte Sendewiederholfrequenz der Laserpulse in einer derartigen Abhängigkeit zu einer Abtastfrequenz steht, dass eine ganzzahlige Anzahl von Perioden der Abtastfrequenz um ein vorgegebenes Zeitintervall größer oder kleiner ist als eine Periodendauer der Sendewiederholfreque, und
wobei dieses Zeitintervall so gewählt wird, dass es einer gewünschten Sampleauflösung entspricht und kleiner ist als die Periodendauer der Abtastfrequenz,
mit einer Abstastschaltung, die eingerichtet ist, die an der Oberfläche des Füllguts reflektierten Laserpulse mit der Abtastfrequenz derart abzutasten, dass pro Laserpuls mehrere Abtastwerte erfasst und jeweils als Subechokurve abgespeichert werden, wobei die Abtastwerte der einzelnen Subechokurven aufgrund der Grundfrequenz, der Abtastfrequenz, der Differenzfrequenz und des Treilerfaktos jeweils zueinander um einen definiertes Zeitintervall verschoben sind,
wobei ein Messzyklus nach Durchschwebung der Differenzfrequenz abgeschlossen wird, wenn die Differenzfrequenz eine Periode durchlaufen hat und die Grundfrequenz und die Abtastfrequenz wieder in Phase sind,
und
mit einer Auswerteeinheit, die eingerichtet ist, die abgespeicherten Subechokurven nach einem Messzyklus zu einer Gesamtechokurve zusammenzusetzen und den Füllstand des Füllguts in dem Behälter anhand der Gesamtechokurve zu ermitteln.

Bei der Sendeeinheit handelt es sich bevorzugt um eine Pulslaserdiode, eine Lasertreiberschaltung und eine optische Linse zur Fokussierung des Laserlichts. Die Empfangseinheit besteht bevorzugt aus einer Photodiode und einer optischen Sammellinse zur Fokussierung des von der Oberfläche des Füllguts reflektierten Laserlichts auf die Photodiode. Bei der Photodiode kann es sich um eine Avalanche Photodiode und einen Transimpedanzverstärker handeln.

Eine vorteilhafte Ausgestaltung der erfindungsgemäßen Vorrichtung schlägt vor, dass es sich bei der Abtastschaltung um einen Analog-/Digitalwandler und bei der Auswerteeinheit um einen Mikroprozessor handelt.

Gemäß einer bevorzugten Ausführungsform liegt die vorgegebene Impulsbreite der Laserpulse zwischen 1ns und 10ns. Es versteht sich von selbst, dass die Erfindung nicht auf diesen Impulsbreitenbereich beschränkt ist. Vielmehr kann die Impulsbreite auf die jeweilige Anwendung angepasst sein. Wie bereits zuvor gesagt, sind die Anforderungen bei Flüssigkeits-messungen höher als bei Feststoffmessungen.

Darüber hinaus wird vorgeschlagen, dass der Teilerfaktor bevorzugt 1/2ⁿ beträgt. Hierbei kann n die Werte 1, 2, 3, ... annehmen. Prinzipiell kann der Teilerfaktor beliebig gewählt werden. Zur Digitalisierung ist der zuvor genannte Teilerfaktor sehr vorteilhaft.

Die Erfindung wird anhand der nachfolgenden Figuren näher erläutert. Es zeigt:
Fig. 1: eine schematische Darstellung der bekannten Transformation eines Hochfrequenz-Signals in den Niederfrequenzbereich,
Fig. 2: ein Blockschaltbild, das das bekannte Funktionsprinzip der Echtzeitabtastung verdeutlicht,
Fig. 3: ein Blockschaltbild, das das Funktionsprinzip des erfindungsgemäßen Verfahrens verdeutlicht,
Fig. 4: schematische Darstellungen von Echokurve, die über das erfindungsgemäße Verfahren gewonnen werden,
   a) wobei eine ganzzahlige Anzahl der Perioden der Abtastfrequenz um ein vorgegebenes Zeitintervall größer ist als eine Periodendauer der Sendewiederholfrequenz,
   b) wobei eine ganzzahlige Anzahl der Perioden der Abtastfrequenz um ein vorgegebenes Zeitintervall kleiner ist als eine Periodendauer der Sendewiederholfrequenz,

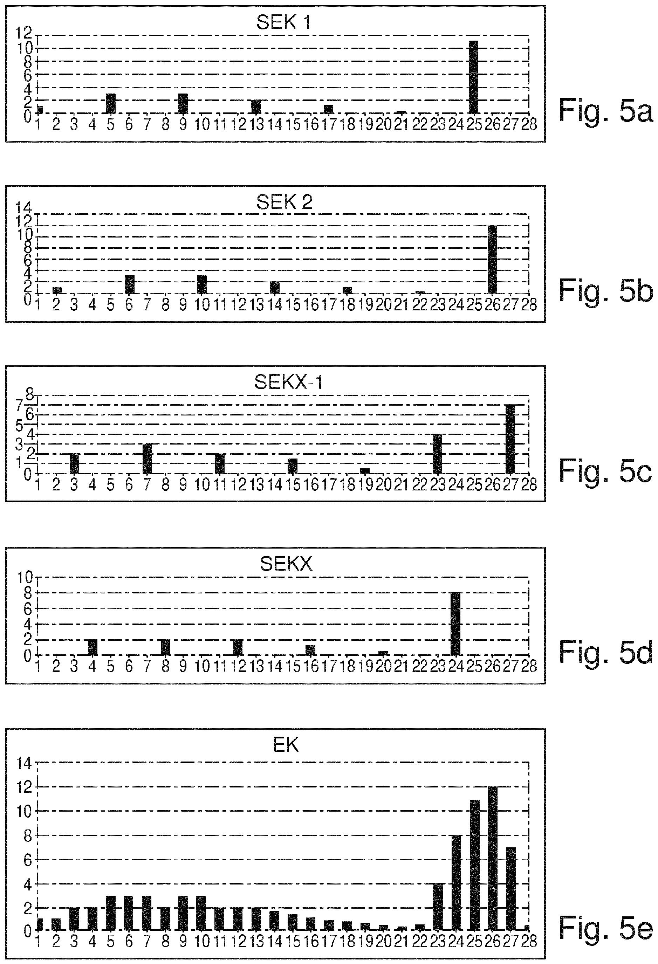

Fig. 5 a-e: eine schematische Darstellung von unterschiedlichen Subecho-kurven, die zu einer Echokurve zusammengefügt werden.

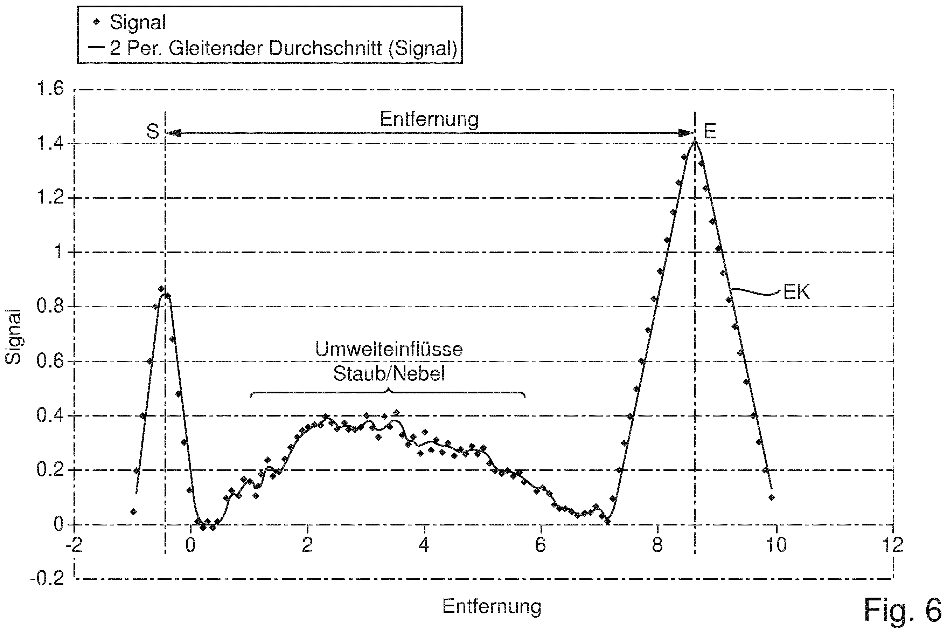

Fig. 6: eine Darstellung, wie anhand einer Echokurve, die erfindungsgemäß ermittelt wurde, der von einem Messsignal zurückgelegte Weg bestimmt wird.

Fig. 1 zeigt eine schematische Darstellung der bekannten Transformation eines Hochfrequenz-Signals in den Niederfrequenzbereich. Um die in der Füllstandsmesstechnik geforderte hohe Messgenauigkeit bei Pulsbreiten von 1-5 ns zu erreichen, sind sehr hohe Abtastfrequenzen und dadurch schnelle und sehr teure Komponenten erforderlich, die zudem einen hohen Stromverbrauch aufweisen. Aufgrund der hohen Kosten, des hohen Stromverbrauchs und der notwendigen Präzision wird in der Radarmesstechnik ein Verfahren genutzt, das zur Ermittlung einer Echokurve bzw. einer Echokurve zahlreiche periodisch sehr schnell wiederkehrende Sendepulse verwendet. Durch ein sequentielles Sampling bzw. Abtastverfahren-Verfahren werden die sehr schnellen Signale in ein verwertbares gedehntes Zeitsignal transformiert. Das gedehnte Zeitsignal kann nachfolgend mit langsameren und deutlich billigeren Komponenten digitalisiert und ausgewertet werden. Gezeigt ist in Fig. 1 das sequentielle Sampling einer Sinusschwingung. Die Samplingzeit T2 ist geringfügig größer als die Signalperiode T1. Nach der sequentiellen Abtastung steht am Ausgang ein zeitgedehntes Abbild des Original-Sendepulses zur Verfügung. Radar-Füllstandsmessgeräte von Endress+Hauser arbeiten nach dem zuvor beschriebenen Verfahren.

Fig. 2 zeigt ein Blockschaltbild, das das Funktionsprinzip der Echtzeit-abtastung bei bekannten Laserbasierten Systemen verdeutlicht. Die Signalerzeugungseinheit 1 erzeugt Signale mit einer Grundfrequenz f, die dem Pulsformer 6 und dem Mikroprozessor 5 zugeleitet werden. Der Pulsformer 6 erzeugt aus den Signalen Laserpulse mit einer vorgegebenen Impulsbreite Tp. Die Laserpulse werden von der Sendeeinheit 2 in Richtung der Oberfläche des in Fig. 2 nicht gesondert dargestellten Füllguts ausgesendet. Gleichzeitig wird über den Frequenzmultiplizierer 7 der AD Wandler 4 gestartet. Bei Aussenden des Sendepulses wird die Information über das Startsignal bzw. über das Nullreferenzsignal an den Mikroprozessor 5 gegeben. Für die genaue Entfernungsmessung vom Austrittspunkt des Laserpulses bis zum Messobjekt wird die Zeitdauer zwischen dem Empfang des Nullreferenzsignals und des vom Messobjekt reflektierten Signals gemessen.

Die an der Oberfläche des Füllguts reflektierten Laserpulse werden nach einer von der Entfernung und daher vom Füllstand des Füllguts abhängigen Laufzeit in der Empfangseinheit 3 empfangen. Die empfangenen Laserpulse werden der Abtastschaltung 4, hier einem entsprechend ausgelegten schnellen AD Wandler, zugeführt, der die Laserpulse in Echtzeit abtastet. Die Abtastfrequenz ist um einen Faktor m größer als die von der Signalerzeugungseinheit 1 erzeugte Grundfrequenz f. Daher werden pro Laserpuls eine Vielzahl von Einzelwerten erfasst. Die Auswerteeinheit 5, hier ein Mikroprozessor, generiert anhand der in Echtzeit abgetasteten Laserpulse die Echokurve EK und ermittelt anhand der Echokurve EK den Füllstand des Füllguts in dem Behälter.

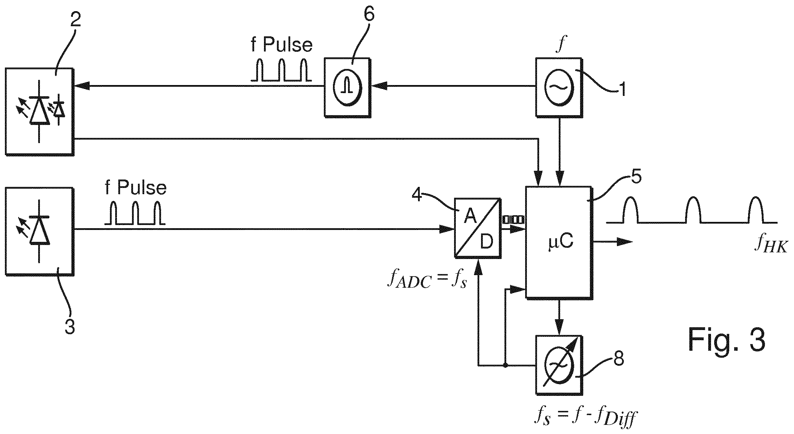

Fig. 3 zeigt ein Blockschaltbild, das das Funktionsprinzip des erfindungs-gemäßen Verfahrens verdeutlicht. Die Signalerzeugungseinheit 1 erzeugt Signale mit einer Grundfrequenz f. Diese Signale mit der Grundfrequenz f werden dem Pulsformer 6 und dem Mikroprozessor 5 zugeleitet. Der Pulsformer 6 erzeugt aus den Signalen Laserpulse mit einer vorgegebenen Impulsbreite Tp bzw. einer vorgegebenen Sendewiederholfrequenz *ƒ* _{Pulse} . Bevorzugt liegt die vorgegebene Impulsbreite Tp der Laserpulse zwischen 1ns und 10ns. Die hiermit erzielte Messgenauigkeit erlaubt die Füllstandsmessung bei bewegten Oberflächen bei flüssigen Füllgütern.

Die Laserpulse werden von der Sendeeinheit 2 in Richtung der Oberfläche des in Fig. 3 gleichfalls nicht gesondert dargestellten Füllguts ausgesendet. Gleichzeitig erhält der Mikroprozessor 5 ein Startsignal, für den Beginn der Messung.

Die an der Oberfläche des Füllguts reflektierten Laserpulse werden nach einer von der Entfernung und daher vom Füllstand des Füllguts abhängigen Laufzeit in der Empfangseinheit 3 empfangen. Die empfangenen Laserpulse werden der Abtastschaltung 4, hier einem AD Wandler, zugeführt. Die Abtastung der Laserpulse erfolgt mit einer Abtastfrequenz *f_{S}* , die sich geringfügig von der Grundfrequenz f unterscheidet. Die Abtastfrequenz wird von der Signalerzeugungseinheit 8, z.B. einem Oszillator, erzeugt. Die Differenzfrequenz *f_{diff}* zwischen Abtastfrequenz *f_{S}* und Grundfrequenz f wird auf einen konstanten Betrag geregelt. Zahlenbeispiele wurden bereits an vorhergehender Stelle genannt. Ein Messzyklus wird von dem Mikroprozessor 5 nach einer Durchschwebung der Differenzfrequenz *f_{diff}* abgeschlossen, wenn also die Differenzfrequenz *f_{diff}* eine Periode T durchlaufen hat und die Grundfrequenz *f* und die Abtastfrequenz *f_{S}* wieder in Phase sind.

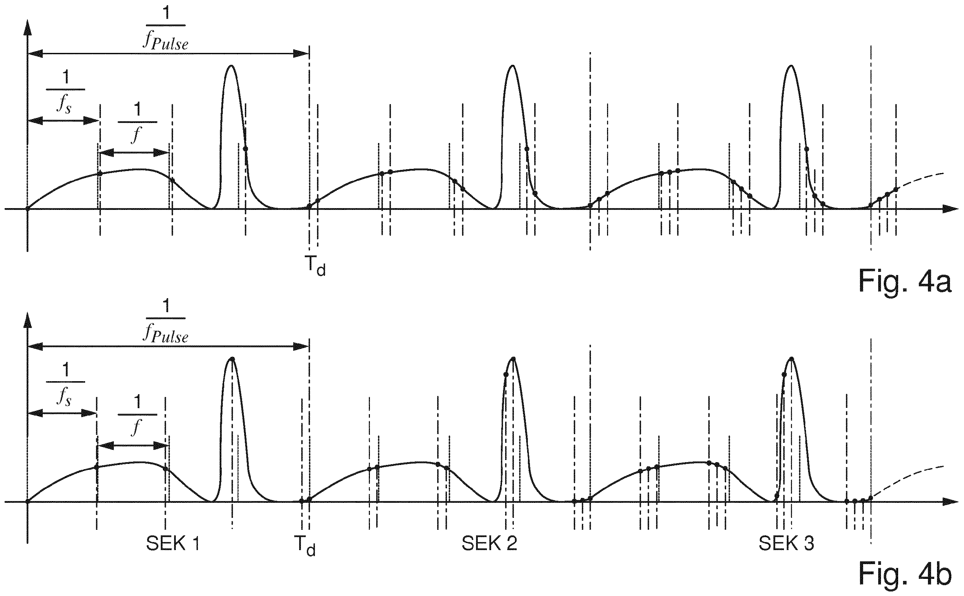

In Abhängigkeit von der gewünschten Auflösung bzw. Messgenauigkeit werden mehrere Subechokurven SEKx aufgenommen, wobei die Abtastwerte der einzelnen Subechokurven SEKx aufgrund der Grundfrequenz *f* , der Abtastfrequenz *f_{S}* , der Differenzfrequenz *f_{diff}* und des Teilerfaktors *TF* jeweils zueinander um einen definiertes Zeitintervall Δt verschoben sind. Bevorzugt beträgt der Teilerfaktor TF 1/2ⁿ , mit n = 1, 2, 3, ... Hierdurch wird eine optimale Ausnutzung des Speichers, der dem Mikroprozessor 5 zugeordnet ist, sichergestellt. Zudem ist die Auswertung vereinfacht. Zeichnerisch dargestellt ist das Zuvorgesagte in den Figuren Fig. 4a und Fig. 4b und in den Figuren Fig. 5a-5e.

Die Figuren Fig. 4a und Fig. 4b zeigen schematische Darstellungen von zeitlich aufeinanderfolgenden Subechokurven SEK1, SEK2, SEK3, ... Die Zusammensetzung einer Echokurve EK aus den zeitlich aufeinander folgenden und gegeneinander um ein definiertes Zeitintervall *T_{d}* verschobenen Subechokurven SEK1, SEK2, SEK3, ... ist in den Figuren Fig. 5a-Fig. 5e visualisiert.

Erfindungsgemäß steht die Sendewiederholfrequenz *f* _{Pulse} der Laserpulse in einer definierten Abhängigkeit zu der Abtastfrequenz *f_{S}* , die auch als Samplefrequenz bezeichnet wird. Die definierte Abhängigkeit ist derart ausgeprägt, dass eine ganzzahlige Anzahl von Perioden der Abtastfrequenz *f_{S}* um ein vorgegebenes Zeitintervall *T_{d}* größer ist als eine Periodendauer der Sendewiederholfrequenz *f* _{Pulse}. Dieser Fall ist in Fig. 4a zu dargestellt.

Fig. 4b zeigt den Fall, dass eine ganzzahlige Anzahl von Perioden der Abtastfrequenz *f_{S}* um ein vorgegebenes Zeitintervall *T_{d}* kleiner ist als eine Periodendauer der Sendewiederholfrequenz *f* _{Pulse}. sehen. Das Zeitintervall *T_{d}* ist jeweils so gewählt, dass eine gewünschte Abtast- bzw. Sampleauflösung erreicht wird, wobei das Zeitintervall *T_{d}* kleiner ist als die Periodendauer der Abtastfrequenz *f_{S}* .

In Fig. 6 ist visualisiert, wie anhand einer erfindungsgemäß ermittelten Echokurve EK der von einem Messsignal zurückgelegte Weg S-E bestimmt wird. Die auf der Echokurve EK aufgetragenen Punkte entsprechen den durch Abtastung gewonnenen Signalwerten. Der kleinere Peak um den Startpunkt S wird durch Störer im Bereich der Sendeeinheit 2 hervorgerufen. Der größere Peak um den Endpunkt E entspricht dem an der Oberfläche des Füllguts reflektierten Signal. Im Bereich zwischen dem Startsignal S und dem Empfangssignal E treten gleichfalls Störreflektionen auf. Diese haben ihre Ursache insbesondere in Umwelteinflüssen, wie Staub oder Nebel.

## Patentansprüche

1. Verfahren zur laserbasierten Bestimmung des Füllstands eines Füllguts in einem Behälter nach einem Laufzeitverfahren,
wobei Laserpulse einer vorgegebenen Impulsbreite (Tp) erzeugt werden,
wobei die Laserpulse mit einer definierten Sendewiederholfrequenz (*f* _{Pulse}) in Richtung der Oberfläche des Füllguts ausgesendet werden,
wobei die definierte Sendewiederholfrequenz (*f* _{Pulse}) der Laserpulse in einer derartigen Abhängigkeit zu einer Abtastfrequenz (*f_{S}*) steht, dass eine ganzzahlige Anzahl
von Perioden der Abtastfrequenz (*f_{S}*) um ein vorgegebenes Zeitintervall (*T_{d}*) größer oder kleiner ist als eine Periodendauer der Sendewiederholfrequenz (*f* _{Pulse}),
wobei dieses Zeitintervall (*T_{d}*) so gewählt wird, dass es einer gewünschten Sampleauflösung entspricht und kleiner ist als die Periodendauer der Abtastfrequenz (*f_{S}*),
wobei die Laserpulse nach Reflexion an der Oberfläche des Füllguts empfangen werden, wobei die an der Oberfläche des Füllguts reflektierten Laserpulse mit einer Abtastfrequenz (*f_{S}*) derart abgetastet werden, dass pro Laserpuls mehrere Abtastwerte erfasst und jeweils als Subechokurve (SEK) abgespeichert werden,
wobei die abgespeicherten Subechokurven (SEK) nach einem Messzyklus zu einer Gesamtechokurve (EK) zusammengesetzt werden,
wobei die vorgegebene Abhängigkeit zwischen der definierten Sendewiederholfrequenz (*f* _{Pulse}) und der Abtastfrequenz (*f_{S}*) realisiert wird, indem über eine erste frequenzerzeugende Komponente (1) eine Grundfrequenz (*f*) erzeugt wird, die größer ist als die Sendewiederholfrequenz (*f* _{Pulse}),
wobei aus der Grundfrequenz (*f*) durch Multiplikation mit einem vorgegebenen Teilerfaktor (TF) die Sendewiederholfrequenz (*f* _{Pulse}) gewonnen wird, und
wobei über eine zweite frequenzerzeugende Komponente (8) die Abtastfrequenz (*f_{S}*) generiert wird,
wobei anhand der Grundfrequenz (*f*) und der Abtastfrequenz (*f_{S}*) eine Differenzfrequenz (*f_{diff}*) erzeugt wird, die auf einen konstanten Wert geregelt wird,
wobei in Abhängigkeit von der gewünschten Auflösung bzw. Messgenauigkeit mehrere Subechokurven (SEKx) aufgenommen werden, wobei die Abtastwerte der einzelnen Subechokurven (SEKx) aufgrund der Grundfrequenz (*f*), der Abtastfrequenz (*f_{S}*), der Differenzfrequenz (*f_{diff}*) und des Teilerfaktors (TF) jeweils zueinander um ein definiertes Zeitintervall (Δt) verschoben sind,
wobei ein Messzyklus nach Durchschwebung der Differenzfrequenz (*f_{diff}*) abgeschlossen wird, wenn die Differenzfrequenz (*f_{diff}*) eine Periode (T) durchlaufen hat und die Grundfrequenz (*f*) und die Abtastfrequenz (*f_{S}*) wieder in Phase sind,
und
wobei der Füllstand anhand der Gesamtechokurve (EK) ermittelt wird.

2. Verfahren nach Anspruch 1,
wobei eine konstante Differenzfrequenz zwischen der Sendewiederhol-frequenz (*f* _{Pulse}) und der Abtastfrequenz (*f_{S}*) über einen Regelkreis (5, 8) eingestellt wird, und
wobei die Sendewiederholfrequenz (*f* _{Pulse}) und die Abtastfrequenz (*f_{S}*), direkt aus den von den Komponenten (1, 8) erzeugten Frequenzen (*f* _{Pulse ,} *f_{S}*) gewonnen werden, oder
wobei die Sendewiederholfrequenz (*f* _{Pulse}) und die Abtastfrequenz (*f_{S}*) indirekt über das Multiplizieren oder Teilen der beiden von den Komponenten (1, 8) erzeugten Frequenzen (*f* _{Pulse} , *f_{S}*) gewonnen werden.

3. Verfahren nach Anspruch 1 oder 2,
wobei der Teilerfaktor 1/2ⁿ (mit n = 1, 2, 3, ...) beträgt.

4. Verfahren nach Anspruch 1, 2 oder 3,
wobei die Grundfrequenz (*f*) und die Abtastfrequenz (*f_{S}*) der Laserpulse in einem Frequenzbereich von 100-200 MHz liegen.

5. Verfahren nach Anspruch 1, 2, 3 oder 4,
wobei der Zeitabstand für die Bereitstellung der Füllstandsmesswerte so gewählt wird, dass einerseits die Anforderungen an die Messgenauigkeit der laserbasierten Technologie für die Anwendung in der Füllstandsmesstechnik und andererseits die Sicherheitsanforderungen für die Benutzer der laserbasierten Technologie erfüllt werden.

6. Verfahren nach Anspruch 5,
wobei die Füllstandsmesswerte eines Messzyklus' in einem Zeitabstand von kleiner 1ms bereitgestellt werden.

7. Verfahren nach einem der vorhergehenden Ansprüche,
wobei für die Differenzbildung (*f_{diff}* = *f - f_{S}*) unmittelbar die Grundfrequenz (*f*) und die Abtastfrequenz (*f_{S}*) herangezogen werden.

8. Laserbasierte Vorrichtung, eingerichtet zur Bestimmung des Füllstands eines Füllguts in einem Behälter nach einem Laufzeitverfahren gemäß zumindest einem der vorhergehenden Ansprüche,
mit einer Signalerzeugungseinheit (1), die eingerichtet ist, Laserpulse mit einer vorgegebenen Impulsbreite (Tp) zu erzeugen,
mit einer Sendeeinheit (2), die eingerichtet ist, die Laserpulse mit einer definierten Sendewiederholfrequenz (*f* _{Pulse}) in Richtung der Oberfläche des Füllguts auszusenden,
wobei die definierte Sendewiederholfrequenz (*f* _{Pulse}) der Laserpulse durch Multiplikation einer vorgegebenen Grundfrequenz (*f*) mit einem Teilerfaktor (TF) gewonnen wird, oder
wobei die Grundfrequenz durch Multiplikation einer definierten Sendewiederholfrequenz (*f* _{Pulse}) mit einem vorgegebenen Faktor gewonnen wird, mit einer Empfangseinheit (3), die eingerichtet ist, die Laserpulse nach Reflexion an der Oberfläche des Füllguts zu empfangen, mit einer ersten frequenzerzeugenden Komponente (1), die ausgelegt ist, die Grundfrequenz (*f*), die größer ist als die Sendewiederholfrequenz (*f* _{Pulse}), zu erzeugen,
mit einer zweiten frequenzerzeugenden Komponente (8), die eingerichtet ist, eine von der Grundfrequenz (*f*) geringfügig abweichende Abtastfrequenz (*f_{S}*) zu generieren,
wobei eine Differenzfrequenz (*f_{diff}*) zwischen der der Grundfrequenz (*f*) und der Abtastfrequenz (*f_{S}*) auf einen konstanten Wert geregelt wird,
wobei die definierte Sendewiederholfrequenz (*f* _{Pulse}) der Laserpulse in einer derartigen Abhängigkeit zu der Abtastfrequenz (*f_{S}*) steht, dass eine ganzzahlige Anzahl von Perioden der Abtastfrequenz (*f_{S}*) um ein vorgegebenes Zeitintervall (*T_{d}*) größer oder kleiner ist als eine Periodendauer der Sendewiederholfrequenz (*f* _{Pulse}), und
wobei dieses Zeitintervall (*T_{d}*) so gewählt wird, dass es einer gewünschten Sampleauflösung entspricht und kleiner ist als die Periodendauer der Abtastfrequenz (*f_{S}*),
mit einer Abstastschaltung (4), die eingerichtet ist, die an der Oberfläche des Füllguts reflektierten Laserpulse mit der Abtastfrequenz (*f_{S}*) derart abzutasten, dass pro Laserpuls mehrere Abtastwerte erfasst und jeweils als Subechokurve (SEK) abgespeichert werden,
wobei die Abtastwerte der einzelnen Subechokurven (SEKx) aufgrund der Grundfrequenz (*f*), der Abtastfrequenz (*f_{S}*), der Differenzfrequenz (*f_{diff}*) und des Treilerfaktos (TF) jeweils zueinander um ein definiertes Zeitintervall (Δt) verschoben sind,
wobei ein Messzyklus nach Durchschwebung der Differenzfrequenz (*f_{diff}*) abgeschlossen wird, wenn die Differenzfrequenz (*f_{diff}*) eine Periode (T) durchlaufen hat und die Grundfrequenz (*f*) und die Abtastfrequenz (*f_{S}*) wieder in Phase sind,
und
mit einer Auswerteeinheit (5), die eingerichtet ist, die abgespeicherten Subechokurven (SEK) nach einem Messzyklus zu einer Gesamtechokurve (EK) zusammenzusetzen und
den Füllstand des Füllguts in dem Behälter anhand der Gesamtechokurve (EK) zu ermitteln.

9. Vorrichtung nach Anspruch 8,
wobei es sich bei der Abtastschaltung (4) um einen Analog-/Digitalwandler und bei der Auswerteeinheit (5) um einen Mikroprozessor handelt.

10. Vorrichtung nach Anspruch 8 oder 9,
wobei die vorgegebene Impulsbreite (Tp) der Laserpulse bevorzugt zwischen 1ns und 10ns liegt.

11. Vorrichtung nach einem oder mehreren der Ansprüche 8-10,
wobei der Teilerfaktor (TF) 1/2ⁿ mit n = 1, 2, 3, ... beträgt.

## Claims

1. Procedure for the laser-based determination of the level of a medium in a vessel according to a transit time procedure,
wherein laser pulses of a predefined pulse width (Tp) are generated,
wherein the laser pulses are emitted with a defined emission repeat frequency (*f* _{Pulse}) in the direction of the surface of the medium,
wherein the defined emission repeat frequency (*f* _{Pulse}) of the laser pulses depends on a scan frequency (*f_{S}*) in such a way that a number of periods of the scan frequency (*f_{S}*) - said number being a whole number - is greater or less than a period duration of the emission repeat frequency (*f* _{Pulse}) by a predefined time interval (*T_{d}*),
wherein this time interval (*T_{d}*) is selected in such a way that it corresponds to a desired sample resolution and is less than the period duration of the scan frequency (*fₛ*),
wherein the laser pulses are received after reflection at the surface of the medium,
wherein the laser pulses reflected at the surface of the medium are scanned with a scan frequency (*f_{S}*) in such a way that multiple scan values are recorded per laser pulse and are saved as a sub-echo curve (SEK),
wherein the saved sub-echo curves (SEK) are compiled into a total echo curve (EK) after a measuring cycle,
wherein the predefined dependence between the defined emission repeat frequency (*f* _{Pulse}) and the scan frequency (*fₛ*) is implemented by generating a basic frequency (*f*), which is greater than the emission repeat frequency (*f* _{Pulse}), via a first frequency-generating component (1),
wherein the emission repeat frequency (*f* _{Pulse}) is obtained from the basic frequency (*f*) by multiplying by a predefined division factor (TF), and
wherein the scan frequency (*f_{S}*) is generated by means of a second frequency-generating component (8),
wherein a differential frequency (*f_{diff}*) is generated on the basis of the basic frequency (*f*) and the scan frequency (*f_{S}*), wherein said differential frequency is regulated to a constant value,
wherein multiple sub-echo curves (SEKx) are recorded depending on the desired resolution or measuring accuracy, wherein the scan values of the individual sub-echo curves (SEKx) are offset in relation to one another by a defined time interval (Δt) on the basis of the basic frequency (*f*), the scan frequency (*f_{S}*), the differential frequency (*f_{diff}*) and the division factor (TF),
wherein a measuring cycle is finished after the passage of the differential frequency (*f_{diff}*) if the differential frequency (*f_{diff}*) has passed through a period (T) and the basic frequency (*f*) and the scan frequency (*f_{S}*) are in phase again, and
wherein the level is determined using the total echo curve (EK).

2. Procedure as claimed in Claim 1,
wherein a constant differential frequency between the emission repeat frequency (*f* _{Pulse}) and the scan frequency (*f_{S}*) is regulated by means of a control circuit (5, 8), and the emission repeat frequency (*f* _{Pulse}) and the scan frequency (*f_{S}*) are obtained directly from the frequencies (*f* _{Pulse} , *fₛ*) generated by the components (1, 8), or
wherein the emission repeat frequency (*f* _{Pulse}) and the scan frequency (*f_{S}*) are obtained indirectly by multiplying or dividing the two frequencies (*f* _{Pulse} , *fₛ*) generated by the components (1, 8).

3. Procedure as claimed in Claim 1 or 2,
wherein the division factor is 1/2ⁿ (with n = 1, 2, 3, ...).

4. Procedure as claimed in Claim 1, 2 or 3,
wherein the basic frequency (*f*) and the scan frequency (*f_{S}*) of the laser pulses are in a frequency range from 100-200 MHz.

5. Procedure as claimed in Claim 1, 2, 3 or 4,
wherein the time interval for providing the level measured values is selected to satisfy, on the one hand, the requirements for the accuracy of the laser-based technology for application in level measuring technology and, on the other hand, to satisfy the safety demands of users of laser-based technology.

6. Procedure as claimed in Claim 5,
wherein the level measured values of a measuring cycle are provided in a time interval of less than 1 ms.

7. Procedure as claimed in one of the previous claims,
wherein the basic frequency (*f*) and the scan frequency (*f_{S}*) are used directly to form the difference (*f_{diff}* = *f -fₛ*).

8. Laser-based unit, designed to determine the level of a medium in a vessel according to a transit time procedure as claimed in at least one of the previous claims,
with a signal generation unit (1), which is designed to generate laser pulses with a predefined pulse width (Tp),
with a transmission unit (2), which is designed to emit laser pulses with a defined emission repeat frequency (*f* _{Pulse}) in the direction of the surface of the medium, wherein the defined emission repeat frequency (*f* _{Pulse}) of the laser pulses is obtained by multiplying a predefined basic frequency (*f*) by a division factor (TF), or
wherein the basic frequency is obtained by multiplying a defined emission repeat frequency (*f* _{Pulse}) by a predefined factor,
with a reception unit (3), which is designed to receive the laser pulses following reflection at the surface of the medium,
with a first frequency-generating component (1), which is designed to generate the basic frequency (*f*) which is greater than the emission repeat frequency (*f _{Pulse}*),
with a second frequency-generating component (8), which is designed to generate a scan frequency (*f_{S}*) which deviates slightly from the basic frequency (*f*), wherein a differential frequency (*f_{diff}*) between the basic frequency (*f*) and the scan frequency (*f_{S}*) is regulated to a constant value,
wherein the defined emission repeat frequency (*f* _{Pulse}) of the laser pulses depends on the scan frequency (*f_{S}*) in such a way that a number of periods of the scan frequency (*f_{S}*) - said number being a whole number - is greater or smaller than a period duration of the emission repeat frequency (*f* _{Pulse}) by a predefined time interval (*T_{d}*), and
wherein said time interval (*T_{d}*) is selected in such a way that it corresponds to a desired sample resolution and is smaller than the period duration of the scan frequency (*fₛ*),
with a scan circuit (4), which is designed to scan the laser pulses reflected at the surface of the medium with the scan frequency (*f_{S}*) in such a way that several scan values are detected per laser pulse and are saved in each case as a sub-echo curve (SEK),
wherein the scan values of the individual sub-echo curves (SEKx) are offset in relation to one another by a defined time interval (Δt) due to the basic frequency (*f*), the scan frequency (*f_{S}*), the differential frequency (*f_{diff}*) and the division factor (TF),
wherein a measuring cycle is completed after the passage of the differential frequency (*f_{diff}*) if the differential frequency (*f_{diff}*) has passed a period (T) and the basic frequency (*f*) and the scan frequency (*f_{S}*) are in phase again,
and
with an evaluation unit (5) that is designed to compile the saved sub-echo curves (SEK) into a total echo curve (EK) following a measuring cycle and to determine the level of the medium in the vessel using the total echo curve (EK).

9. Apparatus as claimed in Claim 8,
wherein the scan circuit (4) is an analog/digital converter and the evaluation unit (5) is a microprocessor.

10. Apparatus as claimed in Claim 8 or 9,
wherein the predefined pulse width (Tp) of the laser pulses is preferably between 1 ns and 10 ns.

11. Apparatus as claimed in one or more of the Claims 8 to 10,
wherein the division factor (TF) is 1/2ⁿ where n = 1, 2, 3, ...

## Revendications

1. Procédé destiné à la détermination par laser du niveau d'un produit dans un réservoir selon une méthode du temps de transit,
des impulsions laser d'une largeur d'impulsion (Tp) prédéfinie étant générées, les impulsions laser étant émises avec une fréquence de répétition d'émission (*f _{Pulse}*) définie en direction de la surface du produit,
la fréquence de répétition d'émission (*f* _{Pulse}) définie des impulsions laser dépendant d'une fréquence d'échantillonnage (*f_{S}*) de telle sorte qu'un nombre entier de périodes de la fréquence d'échantillonnage (*f_{S}*) est supérieur ou inférieur d'un intervalle de temps prédéfini (*T_{d}*) à une durée de période de la fréquence de répétition d'émission (*f _{Pulse}*),
cet intervalle de temps (*T_{d}*) étant choisi de manière à correspondre à une résolution d'échantillonnage souhaitée et étant inférieur à la durée de période de la fréquence d'échantillonnage (*f_{S}*),
les impulsions laser étant reçues après réflexion à la surface du produit,
les impulsions laser réfléchies à la surface du produit étant échantillonnées à une fréquence d'échantillonnage (*f_{S}*) de telle sorte que plusieurs valeurs d'échantillonnage sont détectées par impulsion laser et sont respectivement enregistrées en tant que courbe de sous-écho (SEK),
les courbes de sous-écho (SEK) enregistrées étant assemblées après un cycle de mesure pour former une courbe d'écho globale (EK),
la dépendance prédéfinie entre la fréquence de répétition d'émission (*f* _{Pulse}) définie et la fréquence de balayage (*f_{S}*) étant réalisée en générant, par l'intermédiaire d'un premier composant générateur de fréquence (1), une fréquence de base (*f*) qui est supérieure à la fréquence de répétition d'émission (*f _{Pulse}*),
la fréquence de répétition d'émission (*f* _{Pulse}) étant obtenue à partir de la fréquence de base (*f*) par multiplication par un facteur de division (TF) prédéfini, et
la fréquence d'échantillonnage (*f_{S}*) étant générée par l'intermédiaire d'un deuxième composant générateur de fréquence (8),
une fréquence différentielle (*f_{diff}*) étant générée à l'aide de la fréquence de base (f) et de la fréquence d'échantillonnage (*f_{S}*), laquelle est régulée à une valeur constante,
plusieurs courbes de sous-écho (SEKx) étant enregistrées en fonction de la résolution ou de la précision de mesure souhaitée, les valeurs d'échantillonnage des différentes courbes de sous-écho (SEKx) étant respectivement décalées les unes par rapport aux autres d'un intervalle de temps défini (Δt) en raison de la fréquence de base (*f*), de la fréquence d'échantillonnage (*f_{S}*), de la fréquence différentielle (*f_{diff}*) et du facteur de division (TF),
un cycle de mesure étant terminé après le passage de la fréquence différentielle (*f_{diff}*) lorsque la fréquence différentielle (*f_{diff}*) a traversé une période (T) et que la fréquence de base (*f*) et la fréquence d'échantillonnage (*f_{S}*) sont à nouveau en phase,
et
le niveau étant déterminé à l'aide de la courbe d'écho globale (EK).

2. Procédé selon la revendication 1,
pour lequel une fréquence différentielle constante entre la fréquence de répétition d'émission (*f* _{Pulse}) et la fréquence d'échantillonnage (*f_{S}*) est réglée par l'intermédiaire d'un circuit de régulation (5, 8), et la fréquence de répétition d'émission (*f* _{Pulse}) et la fréquence d'échantillonnage (*f_{S}*) sont obtenues directement à partir des fréquences (*f* _{Pulse} , *f_{S}*) générées par les composants (1, 8), ou
pour lequel la fréquence de répétition d'émission (*f* _{Pulse}) et la fréquence d'échantillonnage (*f_{S}*) sont obtenues indirectement par multiplication ou division des deux fréquences (*f _{Pulse,} fₛ*) générées par les composants (1, 8).

3. Procédé selon la revendication 1 ou 2,
pour lequel le facteur de division est 1/2ⁿ (avec n = 1, 2, 3, ...).

4. Procédé selon la revendication 1, 2 ou 3,
pour lequel la fréquence de base (*f*) et la fréquence d'échantillonnage (*f_{S}*) des impulsions laser se situent dans une gamme de fréquences de 100-200 MHz.

5. Procédé selon la revendication 1, 2, 3 ou 4,
pour lequel l'intervalle de temps pour la mise à disposition des valeurs mesurées de niveau est choisi de manière à satisfaire, d'une part, aux exigences de précision de mesure de la technologie à base de laser pour l'application dans la technique de mesure de niveau et, d'autre part, aux exigences de sécurité pour les utilisateurs de la technologie à base de laser.

6. Procédé selon la revendication 5,
pour lequel les valeurs mesurées de niveau d'un cycle de mesure sont mises à disposition selon un intervalle de temps inférieur à 1 ms.

7. Procédé selon l'une des revendications précédentes,
pour lequel, pour la formation de la différence (*f_{diff}* = *f -fₛ*), on utilise directement la fréquence de base (*f*) et la fréquence d'échantillonnage (*fₛ*).

8. Dispositif à base de laser, conçu pour déterminer le niveau d'un produit dans un réservoir selon une méthode du temps de transit selon au moins l'une des revendications précédentes,
avec une unité de génération de signaux (1), laquelle est conçue pour générer des impulsions laser avec une largeur d'impulsion (Tp) prédéfinie,
avec une unité d'émission (2), laquelle est conçue pour émettre les impulsions laser avec une fréquence de répétition d'émission (*f* _{Pulse}) définie en direction de la surface du produit,
la fréquence de répétition d'émission définie (*f* _{Pulse}) des impulsions laser étant obtenue par multiplication d'une fréquence de base (*f*) prédéfinie par un facteur de division (TF), ou
la fréquence de base étant obtenue par multiplication d'une fréquence de répétition d'émission (*f _{Pulse}*) définie par un facteur prédéfini,
avec une unité de réception (3), laquelle est conçue pour recevoir les impulsions laser après réflexion sur la surface du produit,
avec un premier composant générateur de fréquence (1), lequel est conçu pour générer la fréquence de base (*f*) qui est supérieure à la fréquence de répétition d'émission (*f _{Pulse}*),
avec un deuxième composant générateur de fréquence (8), lequel est conçu pour générer une fréquence d'échantillonnage (*f_{S}*) légèrement différente de la fréquence de base (*f*),
une fréquence différentielle (*f_{diff}*) entre la fréquence de base et la fréquence d'échantillonnage (*f_{S}*) étant régulée à une valeur constante,
la fréquence de répétition d'émission (*f* _{Pulse}) définie des impulsions laser étant en relation de dépendance avec la fréquence d'échantillonnage (*f_{S}*) de telle sorte qu'un nombre entier de périodes de la fréquence d'échantillonnage (*f_{S}*) soit supérieur ou inférieur d'un intervalle de temps prédéterminé (*T_{d}*) à une durée de période de la fréquence de répétition d'émission (*f* _{Pulse}), et
cet intervalle de temps (*T_{d}*) étant choisi de telle sorte qu'il corresponde à une résolution d'échantillonnage souhaitée et qu'il soit inférieur à la durée de période de la fréquence d'échantillonnage (*f_{S}*),
avec un circuit d'échantillonnage (4), lequel est conçu pour échantillonner les impulsions laser réfléchies à la surface du produit avec la fréquence d'échantillonnage (*f_{S}*), de telle sorte que plusieurs valeurs d'échantillonnage sont détectées par impulsion laser et sont respectivement enregistrées comme courbe de sous-écho (SEK),
les valeurs d'échantillonnage des différentes courbes de sous-écho (SEKx) étant respectivement décalées les unes par rapport aux autres d'un intervalle de temps (Δt) défini en raison de la fréquence de base (*f*), de la fréquence de balayage (*f_{S}*), de la fréquence différentielle (*f_{diff}*) et du facteur de division (TF),
un cycle de mesure étant achevé après le passage de la fréquence différentielle (*f_{diff}*) lorsque la fréquence différentielle (*f_{diff}*) a traversé une période (T) et que la fréquence de base (*f*) et la fréquence d'échantillonnage (*f_{S}*) sont à nouveau en phase,
et
avec une unité d'exploitation (5) qui est conçue pour assembler les courbes de sous-écho (SEK) enregistrées après un cycle de mesure en une courbe d'écho globale (EK) et pour déterminer le niveau de produit dans le réservoir à l'aide de la courbe d'écho globale (EK).

9. Dispositif selon la revendication 8,
pour lequel le circuit d'échantillonnage (4) est un convertisseur analogique/numérique et l'unité d'exploitation (5) est un microprocesseur.

10. Dispositif selon la revendication 8 ou 9,
pour lequel la largeur d'impulsion (Tp) prédéfinie des impulsions laser est de préférence comprise entre 1 ns et 10 ns.

11. Dispositif selon l'une ou plusieurs des revendications 8 à 10,
pour lequel le facteur de division (TF) est 1/2ⁿ avec n = 1, 2, 3, ...
